# EUROPÄISCHE PATENTSCHRIFT

(11) **EP 0 647 514 B1**
(45) Veröffentlichungstag und Bekanntmachung des Hinweises auf die Patenterteilung: **30.09.1998**
(21) Anmeldenummer: 94113448.8
(22) Anmeldetag: 29.08.1994
(51) Int. Cl.: B29C 45/16

(54) **Spritzgiess-Formwerkzeug**
Injection moulding mould
Moule d'injection

(30) Priorität: 06.10.1993 CH 3008/93
(43) Veröffentlichungstag der Anmeldung: 12.04.1995
(73) Patentinhaber: Otto Hofstetter AG, 8730 Uznach (CH)
(72) Erfinder: Hofstetter, Otto, CH-8730 Uznach (CH); Fernandez, Luis, CH-8730 Uznach (CH)
(74) Vertreter: Ritscher, Thomas, Dr.

(56) Entgegenhaltungen:
- EP-A- 0 480 223
- DE-A- 3 519 921
- GB-A- 2 010 734
- PATENT ABSTRACTS OF JAPAN vol. 8, no. 174 (M-316) (1611) 10. August 1984 & JP-A-59 067 029 (MEIKI SEISAKUSHO)
- PATENT ABSTRACTS OF JAPAN vol. 14, no. 247 (M-978) (4190) 25. Mai 1990 & JP-A-02 067 117 (TOYO SEIKAN KAISHA)

## Beschreibung

Die vorliegende Erfindung betrifft ein Mehrplatten-Formwerkzeug mit mehreren Formkavitäten und einem Heisskanal-Verteilerblock zum Spritzgiessen von mehrschichtigen Formlingen, insbesondere von zum Blasrecken geeigneten Vorformlingen aus PET gemäss Oberbegriff des Anspruchs 1.

Mehrfach-Formwerkzeuge zum Spritzgiessen von mehrschichtigen Formlingen aus PET-artigen Materialien sind seit längerem bekannt und finden ihre Verwendung im wesentlichen bei der Herstellung von Vorformlingen, wie sie die Getränkeindustrie für ihre sogenannten PET-Flaschen in grossen Mengen benötigt. An diese Formwerkzeuge werden aussergewöhnlich hohe Anforderungen gestellt, da bei der Verarbeitung von PET und dessen Copolymeren den materialspezifischen Besonderheiten besondere Aufmerksamkeit geschenkt werden muss. So erweist sich beispielsweise die Verarbeitungstemperatur bei PET als besonders kritisch. Ist die Verarbeitungstemperatur zu tief, so enstehen kristalline Zonen, welche zu Schlierenbildungen und Sprödigkeit Anlass geben; ist andererseits die Temperatur zu hoch, so bildet sich zusammen mit der einsetzenden Zersetzung des PET ein hoher Anteil an Acetaldehyd, welches insbesondere bei Getränken und anderen Lebensmitteln zu einer unzulässigen Geschmacksbeeinträchtigung führt. PET reagiert ausserdem ausserordentlich empfindlich auf Druckschwankungen und Scherkräfte, welche ebenfalls zu lokalen Kristallisationen führen können. So muss der Fachmann auf das laminare Strömungsverhalten der PET-Masse und die Einspritzgeschwindigkeit ebenso achten, wie auf die gleichmässige Temperatur- und Druckverteilung innerhalb des PET-Materials. Diese und andere Parameter beeinflussen insbesondere auch die Gleichmässigkeit und Homogenität der Schichtdicke und Dichteverteilung innerhalb der hergestellten Vorformlinge.

Eine Vorrichtung mit welcher mehrschichtige Vorformlinge hergestellt werden können, erweist sich als ausserordentlich anspruchsvoll und wird beispielsweise in der EP-307'058 beschrieben. Diese Patentschrift beschreibt einen hot-runner block für 8 Formkavitäten und 5 verschiedene Kunststoff- bzw. Polymermassen. Dabei werden die in separaten Ausspresszylindern eingefüllten einzelnen Kunststoffmassen über ein gemeinsames Ansatzstück den im Heissläuferblock gelagerten einzelnen Düsen zugeführt. Leider erweist sich diese Konstruktion insbesondere wegen der verwendeten T- und Y-splitter, als äusserst aufwendig im Unterhalt, schlecht justierbar und ist für mehr als 8 Formkavitäten ungeeignet. Insbesondere können die Temperaturverhältnisse der einzelnen Kanäle nur ungenügend abgeglichen werden, u.a. weil diese auf verschiedenen Ebenen im Heissläuferblock liegen und damit den konstruktionsbedingten Temperaturgradienten innerhalb des Heissläuferblocks ausgesetzt sind. Ausserdem führt der geringe Durchmesser der einzelnen Kanäle bei PET-Material zu Reibungserscheinungen, welche das Material in unerwünschter Weise verändern, und erlaubt diese Konstruktion nicht, mit einem Förderdruck von mehr als 345 bar zu arbeiten, da oberhalb dieses Druckes diese Konstruktion zu lecken beginnt.

Eine für die Verarbeitung von PET geeignete Vorrichtung wird beispielsweise in der US-4'710'118 beschrieben. Die in dieser Patentschrift offenbarte Konstruktion mit 4 Formkavitäten ist für 3 verschiedene Materialien, Orginal-PET, wiederverwendetes PET und einem anderen thermoplastischen Material, vorgesehen. Dabei wird das plastifizierte Material je einer Dosiereinheit mit einem Auspresszylinder zugeführt und zum Füllen der Kavitäten über ein Verteilerventil in die Formkavität eingepresst. Leider erweist sich auch diese Konstruktion für die Verarbeitung von PET-Formmassen als unzureichend, insbesondere weil die Kanäle in denen das plastifizierte Material zu den Düsen gefördert wird unterschiedliche Längen aufweisen und damit die Fülldichte in den einzelnen Formkavitäten in unerwünschter Weise differiert. Ausserdem erweist sich die Kontrolle der Temperatur des geförderten Materials als äusserst aufwendig und ungenügend und führen die durch das Verteilerventil auf das Material ausgeübten Scherkräfte zu unerwünschten Kristallisationseffekten.

Diese Nachteile weist das beispielsweise in der WO 91/16188 dargestellte Spritzgiess-Werkzeug nicht mehr auf. Bei dieser Vorrichtung wurde auf die Länge der Förderkanäle in besonderer Weise geachtet und wird eine gleichmässige Temperaturverteilung in dafür besonders vorgesehenen Verteilerblöcken erzielt. Leider lässt sich mit dieser Vorrichtung jedoch nicht vermeiden, dass sich die unterschiedlichen Formmassen miteinander vermischen, was insbesondere bei der Herstellung von Vorformlingen für die Getränkeindustrie unakzeptabel ist. Ebenso erweist sich die Verwendung von mehreren Verteilerblöcken für die Justierung und damit die Wartung des gesamten Werkzeugs als problematisch. Diese Konstruktion ist für die Herstellung von Vorformlingen mit verschieden grossen Anteilen an unterschiedlichem Material völlig ungeeignet.

Es ist deshalb Aufgabe der vorliegenden Erfindung ein Spritzgiess-Werkzeug zu schaffen, mit welchem PET-Massen und dessen Copolymere zur Herstellung von mehrschichtigen Vorformlingen einwandfrei verarbeitet werden können, d.h. mehrschichtige Vorformlinge mit einer über dem ganzen Vorformling homogenen Dichte herstellen zu können. Insbesondere soll ein Werkzeug geschaffen werden, welches die Nachteile der bekannten Vorrichtungen nicht aufweist, d.h. keine Durchmischung der verschiedenen Materialien in den Förderkanälen zulässt und trotzdem eine einfache und auch mit 72 Kavitäten noch einwandfrei arbeitende Konstruktion aufweist, in einfacher Weise gewartet werden kann und trotzdem eine hohe Verarbeitungspräzision gewährleistet, sowie unterschiedlich grosse Anteile der verschiedenen PET-Massen in die Formkavitäten fördern kann und doch eine in der gesamten Kavität gleichmässig verteilte Füllung gewährleistet.

Diese Aufgabe wird erfindungsgemäss durch ein Heisskanal-Formwerkzeug mit den Merkmalen des Anspruchs 1 gelöst und weist insbesondere eine Patrizenplatte und eine Matrizenplatte auf, welche während des Einfüll- und Härtungsvorgangs, die Formkavitäten mit ca. 350 Tonnen schliessen. Dabei greifen konische Flächen ineinander, deren Fertigungstoleranzen weniger als 5/1000 mm sind. Dies erlaubt mit einem Förderdruck von 900 - 1000 bar zu arbeiten, ohne dass die Formkavitäten lecken und ermöglicht qualitativ hochstehende Formlinge aus PET herzustellen, d.h. die Formkavitäten gleichmässig mit PET zu füllen und auch kleinere Mengen an Zwischenschichtmaterial unter gleichen Druckbedingungen in die Formkavitäten einzupressen. Um bei diesen Arbeitsbedingungen auch keine Leckage im Düsenbereich und insbesondere keine Fadenbildungen an der Düsenmündung zu erhalten, weist das erfindungsgemässe Werkzeug auch einen pneumatischen Nadelverschluss auf und einen stoffschlüssigen, d.h. nicht weiterzerlegbaren Verteilerblock auf, dessen Kanäle von ihrer Eintrittsöffnung bis zu deren Austrittsöffnung jeder eine gleiche Länge aufweisen und deren Durchmesser sich bei jeder Verzweigungsstelle dem Fördervolumen und Förderdruck entsprechend verringern.

Weitere vorteilhafte Merkmale der Erfindung ergeben sich aus den Unteransprüchen resp. Nebenansprüchen.

Um die für eine gleichmässig gepackte Füllung der Formkavität notwendige homogene Temperaturverteilung im PET-Material zu schaffen, ist der einstückige Verteilerblock in eine Hot-runner-platte resp. Heissläuferplatte eingelassen und insbesondere mit Deckblechen eingefasst. Ein separat beheiztes Schnorchelstück ragt durch die Kopfplatte des Formwerkzeugs und verbindet den einstückigen Verteilerblock mit dem Extruder.

Die Vorteile des erfindungsgemässen Formwerkzeugs ergeben sich für den Fachmann unmittelbar aus dem in den beiliegenden Figuren gezeigten geometrischen Aufbau, welcher erstmals ermöglicht, mehrschichtige Vorformlinge aus PET zu formen, bei welchen die einzelnen Schichten eine homogene Dichteverteilung und eine gleichmässige Schichtdicke aufweisen.

Im folgenden soll die Erfindung anhand eines Ausführungsbeispiels und der Figuren näher erläutert werden. Es zeigt:
- Figur 1 :: Prinzipdarstellung einer Spritzgiessmaschine mit Formwerkzeug,
- Figur 2 :: Schnittbild durch ein erfindungsgemässes Formwerkzeug.
- Figur 3 :: Ausschnitt aus dem Schnittbild der Figur 2 mit einer erfindungsgemässen Nadelverschlussanordnung.

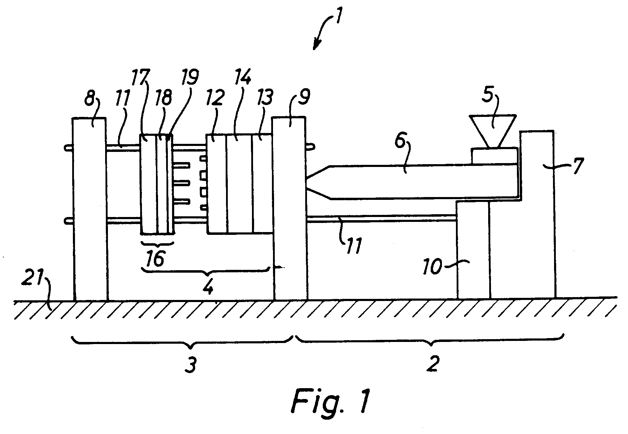

Der prinzipielle Aufbau einer Spritzgiessmaschine ist aus Figur 1 ersichtlich. Grundsätzlich sind bei jeder Spritzgiessmaschine 1 eine erste Baugruppe, die Spritzeinheit 2, von einer zweiten Baugruppe, der Schliesseinheit 3 zu unterscheiden. Mit der Spritzeinheit 2 wird der zu verarbeitende Kunststoff aufbereitet und zur speziellen Formung in die Formkavitäten des Formwerkzeugs 4 der Schliesseinheit 3 eingepresst. Dazu wird das Kunststoffmaterial, im vorliegenden Fall PET, welches handelsüblich in Granulatform vorliegt, in den Fülltrichter 5 gegeben und von einer im Extruder, resp. Spritzaggregat 6 rotierdenden Förderschnecke in einen heissen, plastifizierten Zustand gebracht und in einem Sammelraum an der Spitze des Spritzaggregats 6 bereitgestellt. Während eines Spritzzyklus werden die auf Erstarrungstemperatur gekühlten Formen im Formwerkzeug 4 mit dieser heissen Kunststoffmasse unter Druck, sogenanntem Spritzdruck resp. Förderdruck, gefüllt. Zum Ausgleich der Schwindung, wie sie beim Abkühlen der Kunststoffmasse auftritt, wird für eine gewisse Zeit unter einem bestimmten Nachdruck resp. Haltedruck noch weitere Kunststoffmasse nachgeschoben bis diese vollständg erstarrt ist und nicht mehr weiter schwinden kann. Nach einer weiteren Kühlzeit wird das Formwerkzeug 4 geöffnet und können die erstarrten Formlinge entnommen werden. Der korrekte Ablauf eines solchen Spritzzyklus wird von einer Steuereinheit 7 koordiniert, welche auch die Temperaturführung in den einzelnen Werkzeuggruppen regelt. Dabei soll hier speziell darauf hingewiesen werden, dass die Temperatur der Kunststoffmasse wegen deren schlechtem Wärmeübertragungskoeffizienten und wegen unkontrollierbaren Fliesseffekten erheblich von der Temperatur der Zuführkanäle abweichen kann. Eine kontrollierte Führung der Temperatur innerhalb der Kunststoffmasse ist damit nicht möglich. Feststehende Maschinenplatten 8, 9 und 10, das Maschinenbett 21 sowie massive Führungssäulen 11 gewährleisten die mechanische Stabilität der gesamten Spritzgiess-Maschine 1.

Das erfindungsgemässe Formwerkzeug 4 ist im wesentlichen aus sechs einzelnen Platten aufgebaut und weist in einer bevorzugten Ausführungsform achtundvierzig Formnester auf, ist also ein Mehrplatten-Vielfachwerkzeug. Damit sich dieses Werkzeug insbesondere für die Verarbeitung von PET eignet, müssen diejenigen Teile in welchem das PET-Material bis zur Angussdüse gefördert wird, beheizt werden. Insbesondere weist das erfindungsgemässe Formwerkzeug 4 zwischen einer Matrizenplatte 12 und einer spritzmaschinenseitigen Kopfplatte 13 eine Heissläuferplatte 14 auf, welche einen erfindungsgemässen Heisskanal-Verteilerblock 15 enthält. Eine Patrizenplatte 16 ist aus einer Grundplatte 17 und einer Abstreifplatte 18 mit einem Schieber 19 aufgebaut.

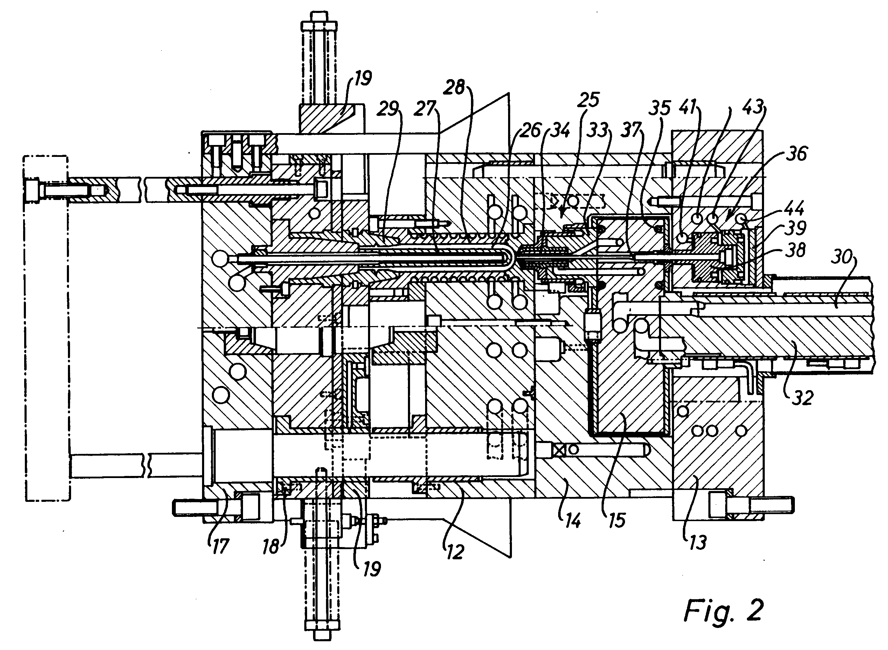

Aus Figur 2 ist der Aufbau einer bevorzugten Ausführungsform des erfindungsgemässen Formwerkzeugs 4 für zwei verschiedene Materialkomponenten ersichtlich. Das in den Extrudern plastifizierte Material gelangt durch in einem Schnorchelstück 32 angebrachte getrennte Kanäle 30 direkt in den Heisskanal-Verteilerblock 15, welcher als Ganzes in der Heissläuferplatte 14 ruht. Dabei sind die Durchmesser der einzelnen Kanäle der Fördermenge für die einzelnen Schichten der mehrschichtigen Formlinge angepasst. Die jeweiligen Verzweigungen für eine bestimmte Materialkomponente liegen vorzugsweise in einer zur Plattenebene parallel liegenden Ebene. Es erweist sich als wesentlich, dass die Geometrie der Verzweigungen derart gewählt ist, dass jeder der einzelnen Kanäle 30 innerhalb des Heissläufer-Verteilerblocks die gleiche Länge aufweist. Erfindungsgemäss ist besonders darauf zu achten, dass die Durchmesser der Kanäle sich nach jeder Verzweigung der gewünschten Fördermenge entsprechend verringern, insbesondere auch um den Förderdruckabfall im gesamten Verteilerblock möglichst klein zu halten. Kavitätsseitig münden diese aufgesplitteten Kanäle in je eine Heisskanaldüse 25, welche einen demontierbaren Düsenhalter 33 und einen Düsenkörper 34 umfasst. Der Düsenkörper 34 ist aus mehreren ineinanderliegenden Düseneinsätzen aufgebaut, zwischen welchen die verschiedenen Kunststoffkomponenten zur Düsenspitze befördert werden. Heizelemente 35 halten sowohl den Heisskanal-Verteilerblock 15 als auch den Düsenhalter 33 und damit den Düsenkörper 34 auf der erforderlichen Temperatur. Eine pneumatisch gesteuerte Nadelverschlussanordnung 36 steuert eine im Düsenspitzenbereich des Düsenkörpers 34 bewegbare Nadel 37 zur Freigabe resp. zum Absperren der einzelnen Komponenten. Wie im bevorzugten Ausführungsbeispiel dargestellt, reichen drei Nadelstellungen zum dreischichtigen Füllen einer Kavität. In einer ersten Stellung ist die Nadel 37 soweit zurückgezogen, dass die Kavität mit einer ersten Komponente, insbesondere mit Original-PET resp. Rohmaterial gefüllt werden kann. In einer zweiten Stellung ist die Nadel 37 soweit zurückgezogen, dass auch die zweite Komponente bspw. rezycliertes PET in die Formkavität gepresst werden kann, bevor die Nadel wieder ganz nach vorne gestossen wird. Typischerweise werden die einzelnen Komponenden mit 700-800 bar während ca. 2 - 8 Sekunden eingefüllt. Dabei zeigt sich, dass es für die Qualität der erzeugten Produkte ganz wesentlich ist, dass die einzelnen Komponenten die gleich Temperatur aufweisen.

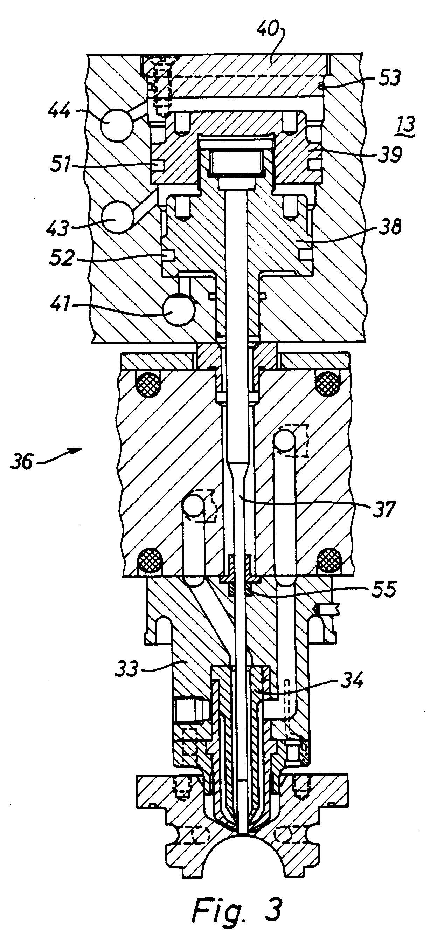

Es erweist sich als besonders vorteilhaft die Nadelverschlussanordnung 36, wie in Fig. 3 dargestellt, in einer als pneumatischer Zylinder wirkenden Aussparung in der Kopfplatte 13 zu logieren. Insbesondere besteht die Nadelverschlussanordnung 36 aus einem ersten die Nadel 37 führenden Kolben 38 über welchem ein zweiter Kolben 39 beweglich eingesetzt ist. Ein hermetisch abschliessender Zylinderdeckel 40 schliesst diese Aussparung druckfest ab. Geeignet angeordnete Druckleitungen 41, 43 und 44 erlauben es, die einzelnen Kolben und damit die Nadel 37 in die gewünschte Stellung zu bringen.
In einer bevorzugten Ausführungsform weisen die einzelnen Druckleitungen verschieden hohe Drucke auf. So kann bzw. die äussere Druckleitung 44 mit 20 bar, die mittlere Druckleitung 43 mit 10 bar und die innere Druckleitung 41 mit 5 bar beaufschlagt werden. Die in Fig. 3 dargestellte Positionierung der einzelnen Kolben 38 und 39 wird erzeugt, wenn die einzelnen Druckleitungen wie oben angegeben unter Druck stehen. Soll die Nadel 37 in eine erste Stellung zur Freigabe der ersten Kunststoff-Komponentezurückgezogen werden, braucht lediglich der Druck in der mittleren Druckleitung 43 reduziert oder aufgehoben zu werden. Damit wird der erste Kolben 38 durch den Druck der inneren Druckleitung 41 bis an den Anschlag des zweiten Kolbens 39 bewegt. Um die Nadel 37 in eine zweite Stellung zu bringen, welche die Zufuhr der zweiten Kunststoff-Komponente öffnet, wird in analoger Weise der Druck der äusseren Druckleitung 44 vermindert resp. aufgehoben. Dies führt dazu, dass sich die beiden Kolben 38, 39 gemeinsam bis an den Zylinderdeckel 40 bewegen. Um die Materialzufuhr wieder zu schliessen wird vorerst die äussere Druckleitung 41 wieder unter Druck gesetzt und werden damit die beiden Kolben 38, 39 gemeinsam in Schliessrichtung bewegt. Erst wenn auch die mittlere Druckleitung 43 wieder unter Druck steht kann durch die Bewegung des ersten Kolbens 38 auch die Zufuhr der ersten Kunststoff-Komponente wieder unterbrochen werden. Für das einwandfreie Arbeiten der hydraulischen Nadelverschlussanordnung 36 sind drucksichere Dichtungen 51, 52 an den einzelnen Kolben und am Zylinderdeckel 53 vorgesehen. Wesentlich jedoch ist eine Axialdichtung 55 im Düsenhalter 33, welche verhindert, dass zwischen der Kolbenanordnung 38, 39 und der Düsenanordnung 33, 34 kein Druckausgleich möglich ist und die unter Pressdruck stehenden Dämpfe der einzelnen heissen Materialkomponenten der Düsennadel 37 entlang durch den Düsenhalter 33 dringen, sich an den Kolbenwandungen oder an der Düsennadel niederschlagen und damit die Beweglichkeit der einzelnen Bauteile der Nadelverschlussanordnung 36 beeinträchtigen resp. blockieren. Dies wird erfindungsgemäss mit einer gasdichten Axialdichtung 55 aus temperaturbeständigem Kunststoff erreicht.

Die in einfacher Weise demontierbare Konstruktion der Heissläuferplatte 14 erlaubt es erstmals ohne nennenswerte Aufwendungen bspw. ein vorhandenes 2-Kanal-Werkzeug auf ein 3-Kanal-Werkzeug umzurüsten, indem lediglich der Heisskanal-Verteilerblock 15 mit dazugehörigen Schnochel 32 und Heisskanaldüse 25 ausgewechselt zu werden braucht. Alle andern Werkzeugplatten können weiterhin unverändert verwendet werden. Durch die stoffschlüssige Konstruktion des Heisskanal-Verteilerblocks 15 und der druckfesten Nadelverschlussanordnung kann mit hohen Förderdrucken gearbeitet werden, was nicht nur die Zykluszeiten verringert, sondern ganz wesentlich auch die Temperaturregelung im Heisskanal verbessert.

Modifikationen des beschriebenen erfindungsgemässen Formwerkzeugs liegen im Bereich des fachmännischen Könnens und Handels. So können gezielte Massnahmen getroffen werden um die Wärmekontakte zwischen den Heizelementen 35 und dem Düsenhalter 33 oder dem Heisskanal-Verteilerblock 15 weiter zu verbessern. Insbesondere können auch Massnahmen getroffen werden um das Strömungsverhalten der einzelnen Komponenten zu beeinflussen oder die mechanische Präzision für das Schliessen von Patrize und Matrize weiter zu erhöhen.

## Patentansprüche

1. Mehrplatten-Formwerkzeug mit mehreren Formkavitäten und einem Heisskanal-Verteilerblock zum Spritzgiessen von mehrschichtigen Formlingen, insbesondere von zum Blasrecken geeigneten Vorformlingen aus PET, mit einer an einer festen Maschinenplatte (9) befestigbaren Kopfplatte (13), dadurch gekennzeichnet, dass dieses Formwerkzeug versehen ist mit einer mit dieser Kopfplatte (13) lösbar verbundenen Heissläuferplatte (14), welche einen Heisskanal-Verteilerblock (15) und mehrere Heisskanal-Düsen (25) enthält,
mit einer an dieser Heissläuferplatte (14) lösbar befestigten Matrizenplatte (12),
mit einer zu dieser Matrizenplatte (12) und entlang fester Führungssäulen (11) verschiebbaren Patrizenplatte (16),
welche Patrizenplatte (16) eine Grundplatte (17), eine Abstreifplatte (18) und eine Schieberplatte (19) umfasst,
wobei die Patrizenplatte (16) mehrere mit der Grundplatte (17) lösbar verbundene Formkerne (27) trägt, um welche je eine an der Schieberplatte (19) befestigte Patrize (29) greift,
welche Patrize (29) eine zur Matrizenplatte (12) sich konisch verjüngende Aussenfläche aufweist und bei geschlossenem Formwerkzeug (4) mit dieser konischen Aussenfläche satt an einer entsprechenden Gegenfläche einer Matrize (28) der Matrizenplatte (12) anliegt und damit die gewünschte Formkavität (26) erzeugt,
welcher Heisskanal-Verteilerblock (15) aus einem einstückigen d.h. stoffschlüssigen Metallblock gefertigt ist, in welchem maschinenseitig mindestens zwei Kanäle (30) für die Zuleitung verschiedener Materialkomponenten vorgesehen sind,
Mittel vorgesehen sind um die Temperatur im Heisskanal-Verteilerblock und den einzelnen Heisskanal-Düsen (25) zu stabilisieren, und
mit einer pneumatischen Nadelverschlussanordnung (36) zum Freigeben resp. Absperren der einzelnen Materialkomkonenten.

2. Mehrplatten-Formwerkzeug nach Anspruch 1, dadurch ge kennzeichnet, dass die satt aneinanderliegenden konischen Flächen von Patrize und Matrize bei geschlossenem Formwerkzeug mit einem Schliessdruck von ca. 350 Tonnen aufeinander gepresst sind.

3. Mehrplatten-Formwerkzeug nach Anspruch 1, dadurch ge kennzeichnet, dass die Abweichung in der Distanz zwischen den konischen Flächen der Patrize resp. Matrize kleiner als 5/1000 mm ist.

4. Mehrplatten-Formwerk zeug gemäss Anspruch 1, dadurch gekennzeichnet, dass im Heisskanal-Verteilerblock die Kanäle (30) sich in eine gewünschte geometrische Anordnung hin verzweigen und diese Verzweigungen für eine bestimmte Materialkomponente in einer zur Plattenebene parallel liegenden Ebene liegen.

5. Heisskanal-Verteilerblock nach Anspruch 4, dadurch ge kennzeichnet, dass die Distanz zwischen maschinenseitiger Eintrittsöffnung und düsenseitiger Austrittsöffnung im Heisskanal-Verteilerblock (15) für jeden Kanal (30) diesselbe ist.

6. Heisskanal-Verteilerblock nach Anspruch 5, dadurch ge kennzeichnet, dass der Durchmesser der einzelnen Kanäle der Fördermenge für die einzelnen Schichten der mehrschichtigen Formlinge angepasst sind.

7. Mehrplatten-Formwerkzeug gemäß Anspruch 4, wobei im Heisskanal-Verteilerblock eine Heisskanaldüse verwendet ist mit einer Nadelverschlussanordnung (36) zum Freigeben resp. Absperren einzelner Materialkomponenten im Düsenspitzenbereich des Düsenkörpers (34) mittels einer bewegbaren Nadel (37), welche Nadelverschlussanordnung (36) einen ersten die Nadel (37) betätigenden Kolben (38) aufweist, über welchem ein zweiter Kolben (39) angeordnet ist, welche Kolben (38,39) in einer als pneumatischer Zylinder wirkenden Aussparung in der kalten Kopfplatte (13) eingestzt sind und Druckleitungen (41,43 u. 44) vorgesehen sind über welche selektiv ein Druckmedium in den pneumatischen Zylinder eingebracht oder abgelassen werden kann, um die einzelnen Kolben in entsprechende Freigabe- resp. Absperrstellungen zu bringen.

8. Mehrplatten-Formwerkzeug gemäß Anspruch 7, wobei die Nadelverschlussanordnung in der Heisskanaldüse (34) mit einer Kolbenanordnung aus einem ersten die Nadel (37) betätigenden Kolben (38), über welchem ein zweiter Kolben (39) angeordnet ist, welche Kolben (38,39) in einer mit einem Zylinderdeckel 40 als pneumatischer Zylinder wirkenden Aussparung in der kalten Kopfplatte (13) eingesetzt sind und mit Druckleitungen (41,43 u. 44) über welche selektiv ein Druckmedium in den pneumatischen Zylinder eingebracht oder abgelassen werden kann, derart, dass der erste Kolben (38) die Nadel (37) in entsprechende Freigabe- resp. Absperrstellungen der Düse (34) bewegt werden kann, dadurch gekennzeichnet, dass zwischen der Düse (34) und der Kolbenanordnung (38, 39) eine gasdichte Axialdichtung (55) vorgesehen ist.

## Claims

1. A multi-plate moulding tool having a plurality of moulding cavities and a hot channel distribution block for injection moulding multilayer preforms, in particular for blow-stretchable preforms made of PET, comprising a head plate (13) attached to a fixed machine plate (9), characterized in that this moulding tool comprises a hot runner plate (14) being removably connected to said head plate (13),said hot runner plate (14) comprising a hot channel distribution block (15) and a plurality of hot channel nozzles (25), with a lower die plate (12) being removably attached to said hot runner plate (14), with an upper die plate (16) being movable to said lower die plate (12) along fixed guide columns (11), said upper die plate (16) comprising a base plate (17), a stripping plate (18) and a slide plate (19), whereby the upper die plate (16) bears a plurality of form cores (27) being removably connected to the base plate (17), around each said form core (27) an annular stamp (29) is arranged, which annular stamp is attached to said slide plate (19), said annular stamp (29) comprising an exterior surface which is conically tapered towards the lower die plate (12), and which, when the forming tool (4) is closed, lies in close fit with a mating opposite surface of a die (28) of the lower die plate (12), thereby forming the desired moulding cavity (26), said hot channel distribution block (15) being a monolithic metal block, in which on the machine side there are arranged at least two channels (30) for infeeding different material components, means being provided for stabilizing the temperature in the hot channel distribution block and in each of the hot channel nozzles (25), and having a pneumatic needle closure arrangement (36) for selectively releasing or blocking the different material components.

2. Multi-plate moulding tool according to claim 1, characterized in that the closely fitting conical surfaces of the stamp and the die are pressed against each other with a closing pressure of around 350 Tons when the form tool is closed.

3. Multi-plate moulding tool according to claim 1, characterized in that the deviation in the distance between the conical surfaces of the stamp and the die is less than 5/1000 mm.

4. Multi-plate moulding tool according to claim 1, characterized in that in the hot channel distribution block the channels (30) branch out in a predetermined geometrical pattern and that for a certain material component these branch channels lie on a plane which is parallel to the plane of the plate for a certain material component.

5. Hot channel distribution block according to claim 4, characterized in that the distance between the inlet opening on the machine side and the outlet opening on the nozzle side in the hot channel distribution block (15) is the same for each channel (30).

6. Hot channel distribution block according to claim 5, characterized in that the diameter of each channel is adapted to the conveying rate of each component for the respective layers of the multi layer preforms.

7. Multi-plate moulding tool according to claim 4, whereby in the hot channel distribution block there is arranged a hot channel nozzle with a needle closure arrangement (36) for releasing and/or closing off individual material components in the area of the nozzle tip of the nozzle body (34) by means of a movable needle (37), said needle closure arrangement (36) comprising a first piston (38) which activates the needle (37), over which first piston a second piston (39) is arranged, said pistons (38, 39) being inserted in a cavity in the cold head plate (13), said cavity acting as a pneumatic cylinder, and pressure lines (41, 43 and 44) being provided, via which a pressure medium can be selectively introduced into or expelled from the pneumatic cylinder, in order to bring the individual pistons into their appropriate releasing or closing positions.

8. Multi-plate moulding tool according to claim 7, whereby the needle closure arrangement for the hot channel nozzle (34) is provided with a first piston (38) actuating the needle (37), over which first piston a second piston (39) is arranged, said pistons (38, 39) being inserted in a cavity in the cold head plate (13) which cavity has a cylinder covering (40), said cavity acting as a pneumatic cylinder, and pressure lines (41, 43 and 44) being provided, via which a pressure medium can be selectively introduced into or expelled from the pneumatic cylinder in such a manner that the first piston (38) can move the needle (37) into appropriate nozzle (34) releasing or closing positions, characterized in that a gas-tight axial seal is provided between the nozzle (34) and the piston arrangement (38, 39).

## Revendications

1. Moule formé de plusieurs plaques comprenant plusieurs empreintes et un bloc de distribution à canaux chauffants, adapté au moulage par injection de pièces semi-finies multi-couches, en particulier de pièces préformées en PET apte à être étirées par soufflage, ledit moule comprenant une plaque de tête (13) capable d'être fixée à une plaque machine (9), caractérisé en ce que ce moule d'injection comprend:
une plaque de chauffage (14) qui est montée démontable sur cette plaque de tête (13) et qui comprend un bloc de distribution (15) à canaux chauffants et plusieurs filières (25) à canaux chauffants,
une plaque matrice (12) reliée par une liaison démontable à cette plaque de chauffage (14),
une plaque poinçon (16) monté coulissant le long de barres de guidage (11) rigides par rapport à cette plaque matrice (12),
ladite plaque poinçon (16) comprenant une plaque de base (17), une plaque de démoulage (18) et une plaque à pointeau (19),
ladite plaque poinçon (16) portant plusieurs noyaux (27) reliés par une liaison démontable à la plaque de base (17), sur chacun desquels un poinçon (29) fixé sur la plaque à pointeau (19) est en prise,
ledit poinçon présentant une surface conique qui se rajeunit vers la plaque matrice (12) et qui affleure lorsque le moule (4) est en position fermée une surface complémentaire d'une matrice (28) de la plaque matrice (12), formant ainsi l'empreinte (26) désirée,
ledit bloc de distribution (15) à canaux chauffants étant réalisé d'un monobloc de métal, c'est à dire en une seule pièce, dans lequel au moins deux canaux (30) sont prévus sur le côté orienté vers la machine pour l'alimentation de différents composants de matière,
des moyens étant prévus pour stabiliser la température dans le bloc de distribution et dans les différentes fières (25) à canaux chauffants, et
un dispositif de fermeture (36) à pointeau à commande pneumatique pour libérer ou fermer le passage des différents composant de matière.

2. Moule formé de plusieurs plaques selon la revendication 1 caractérisé en ce que les surfaces affleurantes du poinçon et de la matrice sont pressés les unes contre les autres avec une pression de fermeture de 350 tonnes lorsque le moule est en position fermée.

3. Moule formé de plusieurs plaques selon la revendication 1, caractérisé en ce que la variation du jeu entre les surfaces coniques du poinçon et de la matrice est inférieure à 5/1000 mm.

4. Moule formé de plusieurs plaques selon la revendication 1, caractérisé en ce que les canaux (30) se ramifient à l'intérieur du bloc de distribution à canaux chauffants de façon à former une disposition géométrique souhaitée et que ces ramifications sont disposées pour un composant de matière défini dans un plan parallèle au plan des plaques.

5. Moule formé de plusieurs plaques selon la revendication 4, caractérisé en ce que la distance prise à l'intérieur du bloc de distribution (15) à canaux chauffants entre l'orifice d'entrée situé du côté de la machine et l'orifice de sortie situé du côté de la filière est la même pour chaque canal (30).

6. Moule formé de plusieurs plaques selon la revendication 5, caratérisé en ce que le diamètre des différents canaux est adapté au débit nécessaire pour les différentes couches des pièces semi-finies multi-couches.

7. Moule formé de plusieurs plaques selon la revendication 4 dans lequel une filière à canaux chauffants est utilisé dans le bloc de distribution à canaux chauffants comprenant un dispositif (36) de fermeture à pointeau (36) pour libérer, respectivement verrouiller le passage de différents composants au niveau de la pointe de la filière du corps de filière (34) au moyen d'un pointeau mobile (37), ledit dispositif (36) de fermeture à pointeau comprenant un premier piston (38) actionnant le pointeau (37), sur lequel est positionné un second piston (39), lesdits pistons (38, 39) étant logés dans un alésage de la plaque de tête (13) froide faisant office de cylindre pneumatique, des conduites sous pression (41, 43 et 44) étant prévues par lesquels un milieu sous pression peut être sélectivement amené ou refoulé dans le cylindre pneumatique, afin d'amener les différents pistons dans une position d'ouverture, respectivement de fermeture correspondante.

8. Moule formé de plusieurs plaques selon la revendication 7, le dispositif de fermeture à pointeau se situant dans la filière (34) à canaux chauffants et comprenant un arrangement de pistons avec un premier piston (38) actionnant le pointeau (37), sur lequel est positionné un second piston (39), lesdits pistons (38, 39) étant logés dans un alésage de la plaque de tête (13) froide faisant office avec un couverce (40) de cylindre pneumatique, et des conduites sous pression (41, 43 et 44) par lesquels un milieu sous pression peut être sélectivement amené ou refoulé dans le cylindre pneumatique de telle sorte que le premier piston (38) du pointeau (37) puisse être amené dans une position d'ouverture, respectivement de fermeture correspondante de la filière (34), caractérisé en ce qu'un joint axial étanche aux gaz est disposé entre la filière (34) et l'arrangement des pistons (38, 39).
